# EUROPÄISCHE PATENTSCHRIFT

(11) **EP 1 679 455 B1**
(45) Veröffentlichungstag und Bekanntmachung des Hinweises auf die Patenterteilung: **16.03.2011**
(21) Anmeldenummer: 05100039.6
(22) Anmeldetag: 05.01.2005
(51) Int. Cl.: F16H 59/02

(54) **Wählhebelanordnung für ein Automatikgetriebe**
Control lever arrangement for an automatic transmission
Agencement d'un levier de commande pour une transmission automatique

(43) Veröffentlichungstag der Anmeldung: 12.07.2006
(73) Patentinhaber: Ford Global Technologies, LLC, A subsidary of Ford Motor Company, Dearborn, MI 48126 (US)
(72) Erfinder: Häfner, Marcus, 51789, Lindlar (DE)
(74) Vertreter: Drömer, Hans-Carsten

(56) Entgegenhaltungen:
- EP-A- 0 447 086
- US-A- 4 898 045

## Beschreibung

Die Erfindung betrifft eine Wählhebelanordnung für ein Automatikgetriebe eines Kraftfahrzeuges mit einem um eine Schwenkachse verschwenkbaren Wählhebel zur Erzeugung einer Wählbewegung, Verbindungsmitteln zur Weiterleitung der Wählbewegung an das Automatikgetriebe und einer Verbindungsanordnung zur Übertragung der Wählbewegung von dem Wählhebel auf die Verbindungsmittel.

Wählhebelanordnungen dienen dazu, eine zum Beispiel durch eine Kulisse geführte Bewegung des Wählhebels auf ein Eingangselement des Automatikgetriebes zu übertragen. Da das Automatikgetriebe entfernt zum im Fahrraum angeordneten Wählhebel angeordnet ist, wird die Bewegung über ein Verbindungsmittel übertragen. Hierbei ist es vorteilhaft, wenn die Wählbewegung durch die Übertragung auf die Verbindungsmittel nicht umgekehrt wird, da, wie bei querliegenden Automatikgetrieben üblich, die Verbindungsmittel zumindest über einen Abschnitt einen Bowdenzug aufweisen, der über seinen Zugdraht eine problemlose Umlenkung von durch die Bewegung erzeugten Zugkräften ermöglicht. Hierbei ist es zugleich erforderlich, dass die Verbindungsmittel in Einbaulage in einer bestimmten Höhe aus dem Fahrgastraum herausgeführt werden, in der sich weder zwischen Fahrgastraum und Motorraum angeordnete Aggregate, insbesondere Heizungsaggregate, befinden noch eine nachteilige Durchführung der Verbindungsmittel durch den Fahrzeugboden erforderlich wird. Dies erfordert, dass die Baugröße der Wählhebelanordnung möglichst kompakt ausgelegt sein muss, zumal in neueren Fahrzeugen zudem ein verhältnismäßig kleiner Einbauraum für die Wählhebelanordnung vorgesehen sein kann.

In EP 0 611 903 B1 wird eine Wählhebelanordnung der eingangs genannten Art beschrieben, in der dank der Verbindungsanordnung eine Umkehrung der Wählbewegung vermieden wird. Hierbei ist die Wählhebelanordnung jedoch konstruktionsbedingt wenig kompakt und weist eine verhältnismäßig große Höhe auf, sodass die ebenfalls konstruktionsbedingt unterseitig an der Verbindungsanordnung angreifenden Verbindungsmittel in Einbaulage der Wählhebelanordnung durch den Fahrzeugboden geführt werden müssen, damit ein Benutzer den Wählhebel in einer für ihn bequemen Angriffshöhe betätigen kann.

In US 4,732,232 wird die Wählbewegung über eine Verbindungsanordnung mit einem Kegelzahnradsatz übertragen, wobei ebenfalls eine Umkehrung der Wählbewegung vermieden wird. Zudem können eine geringere Bauhöhe der Wählhebelanordnung und eine geeignetere Angriffshöhe erzielt werden. Die Verbindungsmittel greifen jedoch hierbei nachteilig seitlich beabstandet an der Verbindungsanordnung an, sodass die Schalthebelanordnung wenig kompakt mit entsprechender seitlicher Breite ausgelegt sind und zudem zusätzliche seitliche Kraftmomente auftreten.

Ferner wird zum Beispiel in EP 0 279 087 A1 eine Wählhebelanordnung offenbart, in der die Verbindungsmittel in einer Angriffshöhe oberhalb der in Einbaulage in der Regel horizontalen Schwenkachse des Wählhebels angreifen, wodurch sich vorteilhaft keine Umkehrung der Wählbewegung ergibt und eine kompaktere Bauweise möglich wird. Nachteilig daran ist jedoch die große Angriffshöhe, die eine Umlenkung der Verbindungsmittel auf eine geringere Höhe notwendig macht. Ferner greifen die Verbindungsmittel ohne Übersetzung direkt an dem Wählhebel an.

Aus der gattungsgemäβer EP 0447086 A1 ist eine Wählhebelanordnung mit zwei Wählhebeln für ein mehrgängiges Getriebe bekannt. Ein um eine Schwenkachse schwenkbarer erster Wählhebel ist über ein Planetenrad mit einer Ausgangswelle verbunden. Mittels eines zweiten Wählhebels kann die Stellung des Planetenrades relativ zur Schwenkachse des ersten Wählhebels eingestellt werden, so daß die Stellung der Ausgangswelle von beiden Wählhebeln beeinflusst wird. Eine solche Wählhebelanordnung findet vor allem Anwendung bei landwirtschaftlichen Maschinen oder Baufahrzeugen, ist jedoch nicht für einen üblichen Wählhebel in Automatikgetrieben von Kraftfahrzeugen geeignet, da sie zwei Wählhebel benötigt und daraus resultierend einen relativ hohen Platzbedarf aufweist.

Aufgabe der Erfindung ist daher, eine Wählhebelanordnung der eingangs genannten Art bereitzustellen, die kompakt ausgelegt ist, deren Verbindungsmittel in Einbaulage in gewünschter Höhe anordenbar sind und die eine Umkehrung der Wählbewegung des Wählhebels vermeidet.

Erfindungsgemäß wird die gestellte Aufgabe mit einer Wählhebelanordnung gemäß den Anspruch 1 gelöst, wobei die Verbindungsanordnung ein Planetengetriebe aufweist, wobei der Wählhebel mit der Antriebsseite des Planetengetriebes und die Verbindungsmittel mit der Abtriebsseite des Planetengetriebes verbunden sind.

Ein Planetengetriebe kann aufgrund seines spezifischen Aufbaues eine besonders kompakte Form aufweisen, sodass die Wählhebelanordnung entsprechend kompakt konzipiert werden kann. Somit ist es möglich, in Einbaulage der Wählhebelanordnung in ein Fahrzeug die Verbindungsmittel in gewünschter Höhe an das Getriebe heranzuführen, dass weder Aggregate, insbesondere Heizungsaggregate, ein Hemmnis bilden können noch eine Durchführung durch den Fahrzeugboden erforderlich wird. Ferner wird, wie weiter unten ausgeführt, ermöglicht, dass die Wählbewegung entsprechend der gestellten Aufgabe bei ihrer Übertragung auf die Verbindungsmittel in ihrer Richtung nicht umgekehrt wird.

Bevorzugt wird eine Ausbildungsform, in der das Planetengetriebe Getriebeelemente in Form eines Hohlrades mit einer Innenverzahnung, mindestens eines auf einem Planetenträger angeordneten Planetenrades und eines Sonnenrades aufweist. Bei der Ausbildung eines Getriebeelementes als außen liegendes Hohlrad sind Hohlrad und Sonnenrad konzentrisch mit innerem Sonnenrad und äußerem Hohlrad angeordnet, sodass die Drehachsen von Hohlrad und Sonnenrad zusammenfallen. Die Planetenräder sind drehbar auf dem Planetenträger mit einer Drehachse bevorzugt parallel zu den Drehachsen von Hohlrad und Sonnenrad sowie kinematisch und örtlich zwischen Hohlrad und Sonnenrad bzw. zwischen den Zahnkränzen von Hohlrad und Sonnenrad angeordnet. Hiermit wird eine besonders einfache, robuste und zugleich kompakte Ausbildungsform des Planetengetriebes vorgeschlagen.

Bevorzugt greifen die Verbindungsmittel umfänglich und in etwa tangentialer Angriffsrichtung an dem als Abtriebseite ausgebildeten Getriebeelement an. Hierdurch wird mit der Übertragung von dem als Abtriebsseite ausgebildeten Getriebeelement auf die Verbindungsmittel ein durch Verbindungsmittel zu übertragender größtmöglicher Wählweg erzeugt. Der Wählweg ist hierbei abhängig von dem Cosinus des Winkels zwischen der Angriffsrichtung und dem Radius zu dem umfänglichen Angriffspunkt, in dem die Verbindungsmittel an das als Abtriebsseite ausgebildete Getriebeelement angreifen. Bevorzugt ist der Angriffspunkt bezüglich der Drehachse des als Abtriebsseite ausgebildeten Getriebeelementes an der dem Wählhebel abgewandten Seite des als Abtriebsseite ausgebildeten Getriebeelementes und somit, in Einbaulage der Wählhebelanordnung in ein Fahrzeug, an der Unterseite des Planetengetriebes angeordnet.

Allgemein ist das Planetengetriebe ein Getriebe mit drei Wellen, von denen zwei antriebsseitig und eine abtriebsseitig, eine antriebsseitig und zwei abtriebsseitig oder eine antriebsseitig, eine bezüglich einer Basis fest und eine abtriebsseitig eingesetzt wird. Hierbei wird die zuletzt aufgeführte Version mit einer antriebsseitigen, einer bezüglich einer Basis festen und einer abtriebsseitigen Welle bevorzugt, da hierüber eine vollständige Momentenübertragung erfolgt. Hierbei wird eine Ausbildungsform bevorzugt, in der der Planetenträger drehfest mit einer Basis verbunden ist. Mit dem drehfest angeordneten Planetenträger sind die Planetenräder in ihrer räumlichen Anordnung bezüglich der Basis, vorzugsweise bezüglich eines Getriebegehäuses des Planetengetriebes, fixiert, und es ist eine vollständige Momentenübertragung vom Sonnenrad über die Planetenräder auf das Hohlrad oder, umgekehrt, von dem Hohlrad über die Planetenräder auf das Sonnenrad möglich, welches eine weiter unten erläuterte Vereinfachung im Aufbau der Wählhebelanordnung mit sich bringt.

In einer bevorzugten Weiterbildung fallen die Drehachsen des Sonnenrades und des Hohlrades mit der Schwenkachse des Wählhebels zusammen. Da die Schwenkachse des Wählhebels gleich den zentralen Drehachsen von Sonnenrad und Hohlrad ist und somit im Zentrum des Sonnengetriebes positioniert ist, kann der Wählhebel ohne weitere Übersetzungen und Verschwenkungen mit einer zum bequemen Ausführen der Wählbewegung notwendig großen Hebellänge und damit mit einer entsprechend großen Hebelkraft direkt an der Antriebsseite des Planetengetriebes, dem Sonnenrad oder dem Hohlrad, angreifen. Hierdurch kann die das Getriebe überragende Länge des Wählhebels entsprechend verringert werden, welches zusätzlich zur kompakten Bauweise der Wählhebelanordnung beitragen kann.

Bevorzugt ist das Hohlrad als Antriebsseite des Planetengetriebes drehfest mit dem Wählhebel verbunden, während das Sonnenrad als Abtriebsseite des Planetengetriebes form- und/oder kraftschlüssig mit den Verbindungsmitteln verbunden ist. Ist zudem in einer bevorzugten Ausbildung der Planetenträger drehfest mit der Basis verbunden, so wird die auf das Hohlrad übertragene Wählbewegung über das Planetenrad vollständig auf das Sonnenrad übertragen und in seiner Richtung umgekehrt. Hierbei greift der Wählhebel bevorzugt an der Außenseite des Hohlrades an, wodurch ein möglichst großer Hebel zur Übertragung der Wählbewegung von dem Wählhebel auf das Hohlrad erzielt wird. Wählhebel und Hohlrad können hierbei einstückig ausgebildet sein. Der Wählhebel kann auch stirnseitig an dem Hohlrad angreifen.

In einer anderen Ausbildung kann, in Umkehrung der zuvor beschriebenen Ausführungsform, das Sonnenrad als Antriebsseite des Planetengetriebes drehfest mit dem Wählhebel verbunden sein, während das Hohlrad als Antriebsseite des Planetengetriebes form- und/oder kraftschlüssig mit den Verbindungsmitteln verbunden ist. Hierbei kann in gleicher Weise der Wählhebel an einer Stirnseite des Sonnenrades angreifen, wobei der Wählhebel bevorzugt an einem radial möglichst äußeren Punkt des Sonnenrades angreifen soll, um einen möglichst großen Hebelarm zur Übertragung der durch den Wählhebel auf das Sonnenrad ausgeübten Kraft zu erhalten. Sonnenrad und Wählhebel können auch einstückig gefertigt sein.

In einer bevorzugten Weiterbildung der Wählhebelanordnung ist das Hohlrad als Zahnradsegment ausgebildet. Durch die Reduktion des Hohlrades auf ein Zahnradsegment wird die kompakte Form der Wählhebelanordnung, insbesondere die des Planetengetriebes, weiter gesteigert. Die erforderliche Größe der Zahnradsegmente hängt von der Größe der Schwenkbewegung des Hebels ab. Wird die Schwenkbewegung beispielsweise von dem Sonnenrad beziehungsweise von dem Hohlrad im Verhältnis von 1:1 auf das Hohlrad beziehungsweise auf das Sonnenrad übertragen, müssen Schwenkbewegungen des Wählhebels und Zahnradsegment mindestens einem gleichen Kreismittelpunktswinkel entsprechen. Um hierbei ein sicheres Ineinandergreifen von Zahnradsegment und Sonnenrad zu gewährleisten, sollte der Kreismittelpunktswinkel des Zahnradsegmentes etwas größer als der der Schwenkbewegung des Wählhebels ausgelegt sein.

Bevorzugt ist das Zahnradsegment des Hohlrades seitlich zur Längserstreckung des Wählhebels angeordnet. Hierdurch ist es möglich, dass Planetengetriebe in seiner Dimensionierung in Längsrichtung bzw. in Kraftangriffsrichtung des Wählhebels zu reduzieren und damit die Wählhebelanordnung kompakter zu gestalten.

In einer gleichfalls bevorzugten Ausbildung der Wählhebelanordnung ist das Sonnenrad als Zahnradsegment ausgebildet. Hierbei ist, wie bei der Ausbildung des Hohlrades als Zahnradsegment, die erforderlich Größe des Zahnradsegmentes insbesondere abhängig von der Größe des mit der Schwenkbewegung des Wählhebels durchlaufenen Kreismittelpunktswinkels.

In einer vorteilhaften Weiterbildung können beide Getriebeelemente, Sonnenrad und Hohlrad, als Zahnradsegmente ausgebildet sein. Hierbei wird eine Ausbildung bevorzugt, in der der Wählhebel antriebsseitig am Zahnradsegment des Sonnenrades angreift, während das Hohlrad abtriebsseitig an den Verbindungsmitteln angreift. Hierbei können beide Getriebeelemente, Sonnenrad und Hohlrad, bezüglich der Schwenkachse an der dem Wählhebel abgewandten Seite des Planetengetriebes, d.h. in Einbaulage der Wählhebelanordnung in ein Fahrzeug, an der unteren Seite des Planetengetriebes angeordnet sein, zu der auch bevorzugt die Verbindungsmittel hingeführt werden. In einer anderen Ausbildungsform kann der Wählhebel antriebsseitig an dem Zahnradsegment des Hohlrades angreifen, während das Zahnradsegment des Sonnenrades abtriebsseitig mit den Verbindungsmitteln verbunden ist.

In einer bevorzugten Weiterbildung kann das Planetengetriebe ein einziges Planetenrad aufweisen. Diese Ausbildungsform bietet sich insbesondere dann an, wenn das Hohlrad und/oder das Sonnenrad als Zahnradsegment ausgebildet sind, wobei das einzige Planetenrad zwischen den Segmenten beziehungsweise zwischen dem Segment und dem nicht als Segment ausgebildeten Getriebeelement angeordnet ist. Hierdurch wird das Planetengetriebe vereinfacht und in seiner kompakte Ausbildung weiter gesteigert.

Es können zur Verbindung der Verbindungsmittel mit der Antriebsseite des Planetengetriebes Erstreckungselemente vorgesehen sein, die sich von der Antriebsseite zu dem Angriffspunkt erstrecken. Bevorzugt sind die Erstreckungselemente drehfest mit der Antriebsseite des Planetengetriebes verbunden. Diese Erstreckungselemente können ausgelegt sein, um beispielsweise einen gewünschten Hebelarm, d.h. einen Abstand zwischen Schwenkachse und Angriffspunkt, herzustellen. Ferner können die Erstreckungselemente von einem als Abtriebsseite ausgebildeten Getriebeelement, das als Zahnradsegment konzipiert ist und üblich des Wählhebels seitlich in dem Planetengetriebe angeordnet ist, sich zu dem Angriffspunkt erstrecken, wobei der Angriffspunkt, bereits oben ausgeführt, vorteilhaft bezüglich der Schwenkachse an der dem Wählhebel abgewandten Seite des Planetengetriebes, d.h., in Einbaulage an der unteren Seite des Planetengetriebes angeordnet ist, um die durch das Verschwenken des Wählhebels erzeugte, rotatorische Wählbewegung möglichst vollständig auf Verbindungsmittel mit linearer Bewegung, wie beispielsweise auf einen Bowdenzug, zu übertragen.

Die Verbindungsmittel können zur Weiterleitung der Wählbewegung mittels eines Bowdenzuges an dem Planetengetriebe angreifen. Ein Bowdenzug weist einen inneren Zugdraht oder dergleichen und einen äußeren Schlauch auf. Hierbei kann der Schlauch an der Basis befestigt sein, während der Draht mit einem über den Schlauch hinausragenden Ende umfänglich auf den als Abtriebsleiter ausgebildeten Getriebeelement aufwickelbar ist. Anstatt eines Bowdenzuges kann doch auch ein Gestänge vorgesehen sein, welches insbesondere bei einem längs liegenden Automatikgetriebe eingesetzt werden kann.

Die vorliegende Erfindung wird nachstehend anhand mehrerer in einer Zeichnung dargestellten Ausführungsbeispiele erläutert. In der Zeichnung zeigen, jeweils in einer stark schematisierten, das zugrundeliegende Prinzip verdeutlichenden Konstruktionsskizze,
- Fig. 1: in einer Seitenansicht ein erstes Ausführungsbeispiel einer Wählhebelanordnung,
- Fig. 2: in einer Seitenansicht ein zweites Ausführungsbeispiel einer Wählhebelanordnung,
- Fig. 3: in einer Seitenansicht ein drittes Ausführungsbeispiel einer Wählhebelanordnung und
- Fig. 4: in einer Seitenansicht ein viertes Ausführungsbeispiel einer Wählhebelanordnung.

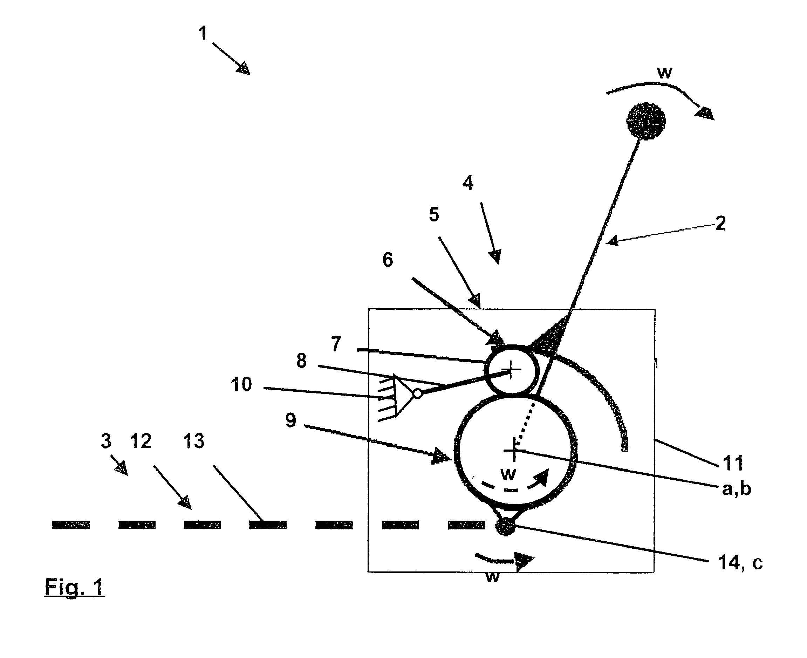

In den Figuren 1 bis 4 werden in jeweils einer Seitenansicht und in stark schematisierter, das zugrundeliegende Prinzip skizzierender Darstellung unterschiedliche Wählhebelanordnungen gezeigt. Die in den Figuren 1 bis 4 dargestellten unterschiedlichen vier Wählhebelanordnungen 1 für ein hier nicht dargestelltes Automatikgetriebe eines nicht dargestellten Kraftfahrzeuges weisen jeweils einen um eine Schwenkachse a verschwenkbaren Wählhebel 2 zur Erzeugung einer Wählbewegung w, Verbindungsmittel 3 zur Weiterleitung der Wählbewegung an das Automatikgetriebe und eine Verbindungsanordnung 4 zur Übertragung der Wählbewegung w von dem Wählhebel 2 auf die Verbindungsmittel 3. Die Verbindungsanordnung 4 ist mit einem Planetengetriebe 5 versehen, wobei der Wählhebel 2 mit der Antriebsseite des Planetengetriebes 5 und die Verbindungsmittel 3 mit der Abtriebsseite des Planetengetriebes 5 verbunden sind. Die Planetengetriebe 5 weisen Getriebeelemente in Form eines Hohlrades 6 mit einer Innenverzahnung, eines Planetenrades 7, das auf einem hier zeichenhaft dargestellten Planetenträger 8 drehbar angeordnet ist, und eines Sonnenrades 9 auf. Der Planetenträger 8 ist mit einer hier lediglich in Symbolform wiedergegebenen Basis 10 verbunden, wobei die Basis 10 beispielsweise das Getriebegehäuse des Planetengetriebes sein kann.

Die Drehachse b des Sonnenrades 9 und des Hohlrades 6 fallen mit der Schwenkachse a des Wählhebels 2 zusammen, wobei die Schwenkachse a und Drehachsen b in der Zeichnung senkrecht zur Zeichnungsebene stehen. Durch die feste Anbindung des Planetenträgers 8 an die Basis 10 wird die Wählbewegung w, die durch ein Verschwenken des Wählhebels 2 um seine Schwenkachse a auf das Sonnenrad 9 beziehungsweise das Hohlrad 6 übertragen wird, vollständig auf das Hohlrad 6 beziehungsweise das Sonnenrad 9 weiter übertragen, wobei die Wählbewegung w über die Schwenkachse a und das Planetenrad 7 jeweils eine und damit insgesamt eine zweifache Richtungsumkehr erfährt, sodass insgesamt die Richtung der Wählbewegung bezüglich der in den Figuren 1 bis 4 dargestellten Längsverlauf der Verbindungsmittel 3 innerhalb einer bestimmten Verschwenkung des Wählhebels 2 um seine Schwenkachse a etwa unverändert bleibt. Durch die Verwendung eines Planetengetriebes 5 wird eine geforderte kompakte Bauweise der Wählhebelanordnung 1 gefördert. Wie weiter unten in der Erläuterung der vier Ausführungsformen der Wählhebelanordnung 1 näher beschrieben, sind/ist Planetenrad 7 und/oder Sonnenrad 9 als Zahnradsegmente/Zahnradsegment ausgebildet, wodurch die Möglichkeit zur kompakten Bauweise der Wählhebelanordnung 1 gesteigert wird. Hierbei ist die erforderliche Größe des jeweiligen Zahnradsegmentes abhängig von der Größe der Schwenkbewegung w des Wählhebels 2. Das heißt, Schwenkbewegung w und jeweiliges Zahnradsegment müssen zumindest einem gleichen Kreismittelpunktswinkel entsprechen. Um ein sicheres Ineinandergreifen von Zahnradsegment und dem jeweilig anderen Getriebeelement, Hohlrad 6 oder Sonnenrad 9, beziehungsweise ein sicheres Ineinandergreifen der Zahnradsegmenten zu gewährleisten, sollte der Kreismittelpunktswinkel des jeweiligen Zahnradsegmentes beziehungsweise der Zahnradsegmente zumindest etwas größer als der der Schwenkbewegung w des Wählhebels 2 sein. Durch den Einsatz mindestens eines Zahnradsegmentes ist zugleich auch nur ein einziges Planetenrad 7 für die Übertragung der Wählbewegung w erforderlich, wodurch die kompakte Bauweise der Wählhebelanordnung 1 weiter gesteigert wird.

Die Verbindungsmittel 3 greifen in allen vier Ausführungsformen der Wählhebelanordnung 1, bezüglich der Schwenkachse a des Wählhebels 2, an der dem Wählhebel 2 abgewandten Seite des Planetengetriebes 5, d.h. in der in den Figuren 1 bis 4 ungefähr wiedergegebenen Einbaulage des Planetengetriebes 5 an der Unterseite des Planetengetriebes 5 an. Hierdurch weist der Wählhebel 2 in seiner Schwenkbewegung um die Schwenkachse a eine maximale Wegkomponente in Längserstreckung der Verbindungsmittel 3 auf, sodass eine größtmögliche Übertragung der Wählbewegung w auf die Verbindungsmittel 3 gewährleistet ist. Die hier schematisch eingezeichneten Verbindungsmittel 3 greifen in ihrer hier gezeigten Längserstreckung umfänglich und in etwa tangentialer Richtung an dem als Abtriebsseite ausgebildeten Getriebeelement an. Die Verbindungsmittel 3 weisen hier einen Bowdenzug 12 auf, dessen Zugdraht 11 an der Unterseite des abtriebsseitigen Getriebeelementes 9 Planetengetriebes 5, des Sonnenrades 9 oder des Hohlrades 6, angreift. Wie hier nicht explizit dargestellt, weist der Bowdenzug 12 einen äußeren Schlauch und dergleichen auf, in dem der Zugdraht 13 verschiebbar gelagert ist, wobei der Schlauch relativ an der Basis 10 befestigt und der Zugdraht 13 mit seinem hier dargestellten, über den Schlauch hinausragenden Ende umfänglich auf das Sonnenrad 9 aufwickelbar ist. Hierzu weist das Sonnenrad eine hier nicht dargestellte, zumindest teilumfängliche Nut auf, in die der Zugdraht hinein aufwickelbar ist. Der Zugdraht 13 ist über ein Befestigungsmittel 14 mit dem Sonnenrad 9 bzw. dem Hohlrad 6 verbunden und um eine Zugdrahtschwenkachse c, die parallel zu den Schwenkachsen a und der Drehachse b verläuft, schwenkbar gelagert.

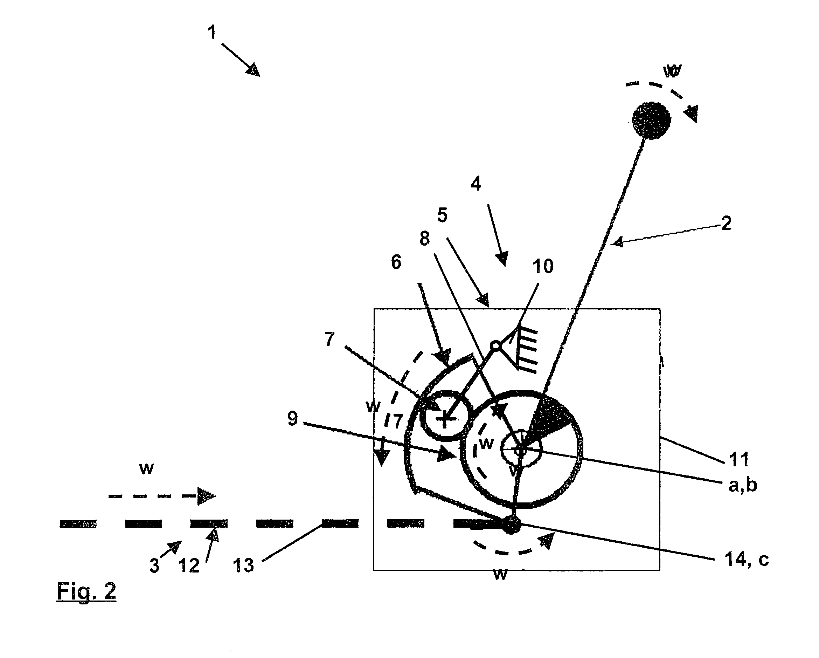

In Fig. 1 wird schematisch in einer Seitenansicht eine erste Ausführungsform der Wählhebelanordnung 1 gezeigt. Hierbei ist das Hohlrad 6 als Antriebsseite des Planetengetriebes 5 drehfest mit dem Wählhebel 2 verbunden, während das Sonnenrad 9 als Abtriebsseite des Planetengetriebes 5 form- und/oder kraftschlüssig mit den Verbindungsmitteln 3 verbunden ist. Hierbei greift der Wählhebel 2 direkt an der Außenseite des Hohlrades 6 an, sodass die Schwenkachse a des Wählhebels 2 und der Drehachse b des Hohlrades 6 identisch sind, welches in der Figur durch die gestrichelte, zum Mittelpunkt des Hohlrades 6 führenden Linie angedeutet ist. Die in beiden Figuren 1 und 2 um das Planetengetriebe 5 gezeichnete Umrandung soll einen verminderten Einbauraum 11 für das Planetengetriebe 5 symbolisieren, in dem das Planetengetriebe 5 einbaubar sein soll. Das Hohlrad 6 ist hier als Zahnradsegment ausgebildet.

In Fig. 2 ist eine zweite Ausführungsform der Wählhebelanordnung 1 gezeigt, in der das Sonnenrad 9 als Antriebsseite des Planetengetriebes 5 drehfest mit dem Wählhebel 2 verbunden ist, während das Hohlrad 6 als Abtriebsseite des Planetengetriebes 5 form- und/oder kraftschlüssig mit den Verbindungsmitteln 3 verbunden ist. Das Hohlrad 6 ist als Zahnradsegment ausgebildet, das, zur Verringerung der maximalen Höhe des Planetengetriebes 5, in Einbaulage seitlich zum Sonnenrad 9 angeordnet ist. Um jedoch eine maximale Übertragung der Wählbewegung w auf die Verbindungsmittel 3 zu erzielen, sind Erstreckungselemente 15 vorgesehen, die sich von dem Zahnradsegment des Hohlrades 6 zu der vom Wählhebel 2 abgewandten Seite des Planetengetriebes 5, d.h. zu der in Einbaulage unteren Seite des Planetengetriebes 5, sowie zu einem radial weiter innenliegenden Angriffspunkt erstrecken.

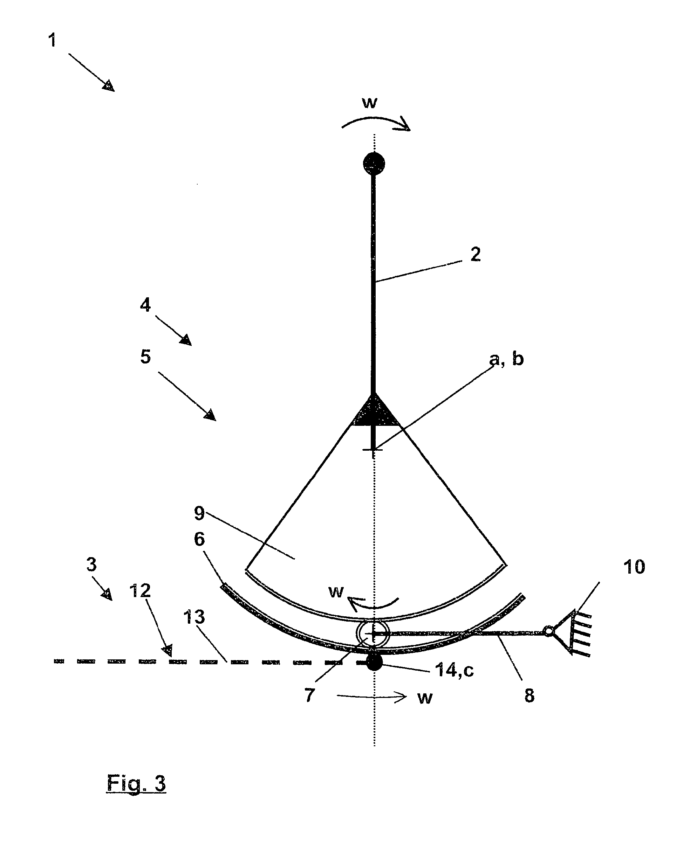

In Fig. 3 wird eine dritte Ausführungsform der Wählhebelanordnung 1 gezeigt. Hierbei sind Hohlrad 6 und Sonnenrad 9 als Zahnradsegmente ausgebildet, wobei das Sonnenrad 9 als Antriebsseite des Planetengetriebes 5 drehfest mit dem Wählhebel 2 verbunden ist, während das Hohlrad 6 als Abtriebsseite des Planetengetriebes 5 form- und/oder kraftschlüssig mit den Verbindungsmitteln 3 verbunden ist. Hierbei sind die beiden Zahnradsegmente an der Unterseite des Planetengetriebes 5 angeordnet, sodass die Verbindungsmittel 3 direkt unterseitig an dem Planetenrad 7 angreifen können. Durch die Ausbildung beider Getriebeelemente, des Hohlrades 6 und des Sonnenrades 9, ist eine weitere Reduzierung der Baugröße des Planetengetriebes 5 möglich.

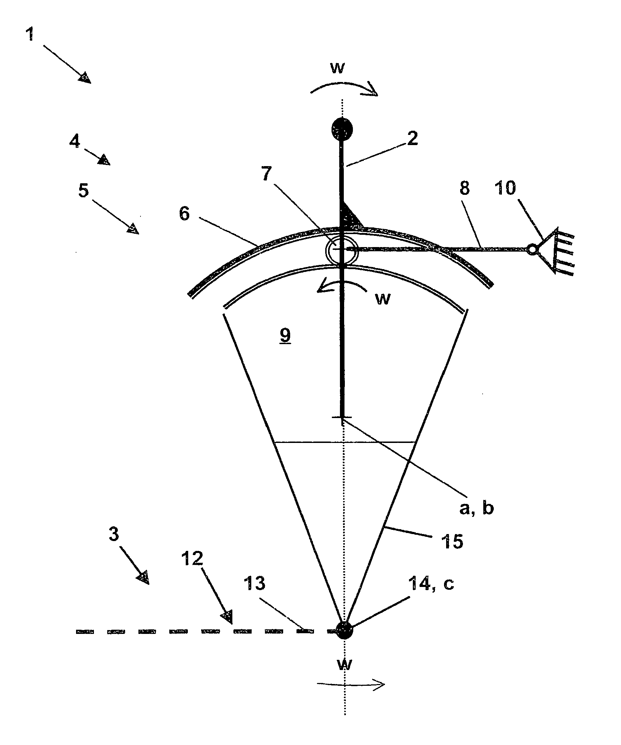

Fig. 4 gibt eine vierte Ausführungsform der Wählhebelanordnung 1 wieder, in der wie in der dritten Ausbildungsform der Wählhebelanordnung 1, Hohlrad 6 und Sonnenrad 9 als Zahnradsegmente ausgebildet sind. Hierbei ist jedoch das Hohlrad 6 als Antriebsseite des Planetengetriebes 5 drehfest mit dem Wählhebel 2 verbunden, während das Sonnenrad 9 als Abtriebsseite des Planetengetriebes 5 form- und und/oder kraftschlüssig mit den Verbindungsmitteln 3 verbunden ist. Hierbei sind zusätzlich Erstreckungselemente 15 vorgesehen, die sich weiter zur Unterseite des Planetengetriebes 5 erstrecken, um einen gewünschten Hebel zwischen Schwenkachse a beziehungsweise Drehachse b und den Angriffsbereich der Verbindungsmittel 3 einzustellen.

### BEZUGSZEICHENLISTE

- 1.: Wählhebelanordnung
- 2.: Wählhebel
- 3.: Verbindungsmittel
- 4.: Verbindungsanordnung
- 5.: Planetengetriebe
- 6.: Hohlrad
- 7.: Planetenrad
- 8.: Planetenträger
- 9.: Sonnenrad
- 10.: Basis
- 11.: Einbauraum
- 12.: Bowdenzug
- 13.: Zugdraht
- 14.: Befestigungsmittel
- 15.: Erstreckungselement
- a: Schwenkachse
- b: Drehachse
- c: Zugdrahtschwenkachse
- w: Wählbewegung

## Patentansprüche

1. Wählhebelanordnung (1) für ein Automatikgetriebe eines Kraftfahrzeuges mit einem um eine Schwenkachse (a) verschwenkbaren Wählhebel (2) zur Erzeugung einer Wählbewegung (w), Verbindungsmitteln (3) zur Weiterleitung der Wählbewegung (w) an das Automatikgetriebe und einer Verbindungsanordnung (4) zur Übertragung der Wählbewegung (w) von dem Wählhebel (2) auf die Verbindungsmittel (3), wobei die Verbindungsanordnung (4) ein Planetengetriebe (5) aufweist und der Wählhebel (2) mit der Antriebsseite des Planetengetriebes (5) und die Verbindungsmittel (3) mit der Abtriebsseite des Planetengetriebes (5) verbunden sind, und wobei das Planetengetriebe (5) Getriebeelemente in Form eines Hohlrades (6) mit einer Innenverzahnung, mindestens eines Planetenrades (7) auf einem Planetenträger (8) und eines Sonnenrades (9) aufweist,
**dadurch gekennzeichnet, dass**
der Planetenträger (8) drehfest mit einer Basis (10) verbunden ist, wobei die Basis (10) das Getriebegehäuse des Planetengetriebes ist.

2. Wählhebelanordnung (1) nach Anspruch 1, **dadurch gekennzeichnet**, die Verbindungsmittel (3) umfänglich und in etwa tangentialer Angriffsrichtung an dem als Abtriebsseite ausgebildeten Getriebeelement angreifen.

3. Wählhebelanordnung (1) nach einem der Ansprüche 1 oder 2, **dadurch gekennzeichnet, dass** die Drehachsen (b) des Sonnenrades (9) und des Hohlrades (6) mit der Schwenkachse (a) des Wählhebels (2) zusammenfallen.

4. Wählhebelanordnung (1) nach einem der Ansprüche 1 bis 3, **dadurch gekennzeichnet, dass** das Hohlrad (6) als Antriebsseite des Planetengetriebes (5) drehfest mit dem Wählhebel (2) verbunden ist, während das Sonnenrad (9) als Abtriebsseite des Planetengetriebes (5) form- und/oder kraftschlüssig mit den Verbindungsmitteln (3) verbunden ist.

5. Wählhebelanordnung (1) nach Anspruch 4, **dadurch gekennzeichnet, dass** der Wählhebel (2) an der Außenseite des Hohlrades (6) angreift.

6. Wählhebelanordnung (1) nach einem der Ansprüche 1 bis 3, **dadurch gekennzeichnet, dass** das Sonnenrad (9) als Antriebsseite des Planetengetriebes (5) drehfest mit dem Wählhebel (2) verbunden ist, während das Hohlrad (6) als Abtriebsseite des Planetengetriebes (5) form- und/oder kraftschlüssig mit den Verbindungsmitteln (3) verbunden ist.

7. Wählhebelanordnung (1) nach Anspruch 6, **dadurch gekennzeichnet, dass** der Wählhebel (2) an einer Stirnseite des Sonnenrades (9) angreift.

8. Wählhebelanordnung (1) nach einem der Ansprüche 1 bis 7, **dadurch gekennzeichnet**, das Hohlrad (6) als Zahnradsegment ausgebildet ist.

9. Wählhebelanordnung (1) nach einem der Ansprüche 1 bis 7, **dadurch gekennzeichnet**, das Sonnenrad (9) als Zahnradsegment ausgebildet ist.

10. Wählhebelanordnung (1) nach Anspruch 1 bis 9, **dadurch gekennzeichnet, dass** das Planetengetriebe (5) ein einziges Planetenrad (7) aufweist.

11. Wählhebelanordnung (1) nach einem der Ansprüche 1 bis 10, **dadurch gekennzeichnet, dass** zur Verbindung der Verbindungsmittel (3) mit der Abtriebsseite des Planetengetriebes (5) Erstreckungselemente (15) vorgesehen sind.

12. Wählhebelanordnung (1) nach einem der Ansprüche 1 bis 11, **dadurch gekennzeichnet, dass** die Verbindungsmittel (3) zur Weiterleitung der Wählbewegung (w) mittels eines Bowdenzuges (12) an der Abtriebsseite des Planetengetriebes (5) angreifen.

## Claims

1. Selector lever arrangement (1) for an automatic transmission of a motor vehicle having a selector lever (2) which is pivotable about a pivot axis (a) and has the purpose of generating a selector movement (w), connecting means (3) for transferring the selector movement (w) to the automatic transmission and a connecting arrangement (4) for transmitting the selector movement (w) from the selector lever (2) to the connecting means (3), the connecting arrangement (4) having a planetary gear mechanism (5) and the selector lever (2) being connected to the input side of the planetary gear mechanism (5) and the connecting means (3) being connected to the output side of the planetary gear mechanism (5), and the planetary gear mechanism (5) having gear mechanism elements in the form of an internal gear (6) having inner tooth gearing, at least one planet gear (7) on a planet carrier (8), and a sun gear (9), **characterized in that**
the planet carrier (8) is connected to a base (10) in a rotationally fixed manner, the base (10) being the gear mechanism housing of the planetary gear mechanism.

2. Selector lever arrangement (1) according to Claim 1, **characterized in that** the connecting means (3) engage circumferentially and in an approximately tangential engagement direction on that gear mechanism element which is designed as an output side.

3. Selector lever arrangement (1) according to either of Claims 1 and 2, **characterized in that** the rotational axes (b) of the sun gear (9) and of the internal gear (6) coincide with the pivot axis (a) of the selector lever (2).

4. Selector lever arrangement (1) according to one of Claims 1 to 3, **characterized in that** the internal gear (6) is preferably connected, as an input side of the planetary gear mechanism (5), in a rotationally fixed manner to the selector lever (2), while the sun gear (9) is connected, as an output side of the planetary gear mechanism (5), to the connecting means (3) in a positive and/or non-positive manner.

5. Selector lever arrangement (1) according to Claim 4, **characterized in that** the selector lever (2) engages on the outer side of the internal gear (6).

6. Selector lever arrangement (1) according to one of Claims 1 to 3, **characterized in that** the sun gear (9) is connected, as an input side of the planetary gear mechanism (5), in a rotationally fixed manner to the selector lever (2), while the internal gear (6) is connected, as an output side of the planetary gear mechanism (5), to the connecting means (3) in a positive and/or non-positive manner.

7. Selector lever arrangement (1) according to Claim 6, **characterized in that** the selector lever (2) engages on an end side of the sun gear (9).

8. Selector lever arrangement (1) according to one of Claims 1 to 7, **characterized in that** the internal gear (6) is designed as a gear segment.

9. Selector lever arrangement (1) according to one of Claims 1 to 7, **characterized in that** the sun gear (9) is designed as a gear segment.

10. Selector lever arrangement (1) according to one of Claims 1 to 9, **characterized in that** the planetary gear mechanism (5) has a single planet gear (7).

11. Selector lever arrangement (1) according to one of Claims 1 to 10, **characterized in that** extension elements (15) are provided to connect the connecting means (3) to the output side of the planetary gear mechanism (5).

12. Selector lever arrangement (1) according to one of Claims 1 to 11, **characterized in that**, in order to transfer the selector movement (w), the connecting means (3) engage on the output side of the planetary gear mechanism (5) by means of a Bowden cable (12).

## Revendications

1. Agencement de levier de commande (1) pour une transmission automatique d'un véhicule automobile, comprenant un levier de commande (2) pouvant pivoter autour d'un axe de pivotement (a) pour produire un mouvement de commande (w), des moyens de connexion (3) pour transmettre le mouvement de commande (w) à la transmission automatique et un agencement de connexion (4) pour le transfert du mouvement de commande (w) du levier de commande (2) aux moyens de connexion (3), l'agencement de connexion (4) présentant un engrenage planétaire (5) et le levier de commande (2) étant connecté au côté d'entraînement de l'engrenage planétaire (5) et les moyens de connexion (3) étant connectés au côté de sortie de l'engrenage planétaire (5), l'engrenage planétaire (5) présentant des éléments de transmission forme d'une couronne (6) avec une denture intérieure, d'au moins un pignon planétaire (7) sur un porte-satellites (8) et d'une roue solaire (9),
**caractérisé en ce que**
le porte-satellites (8) est connecté de manière solidaire en rotation à une base (10), la base (10) étant le boîtier de transmission de l'engrenage planétaire.

2. Agencement de levier de commande (1) selon la revendication 1, **caractérisé en ce que** les moyens de connexion (3) viennent en prise sur la périphérie et dans la direction d'attaque approximativement tangentielle sur l'élément de transmission réalisé sous forme de côté de sortie.

3. Agencement de levier de commande (1) selon l'une quelconque des revendications 1 ou 2, **caractérisé en ce que** les axes de rotation (b) de la roue solaire (9) et de la couronne (6) coïncident avec l'axe de pivotement (a) du levier de commande (2).

4. Agencement de levier de commande (1) selon l'une quelconque des revendications 1 à 3, **caractérisé en ce que** la couronne (6) en tant que côté d'entraînement de l'engrenage planétaire (5) est connectée de manière solidaire en rotation au levier de commande (2), tandis que la roue solaire (9) sous forme de côté de sortie de l'engrenage planétaire (5) est connectée par engagement par correspondance géométrique et/ou par force aux moyens de connexion (3).

5. Agencement de levier de commande (1) selon la revendication 4, **caractérisé en ce que** le levier de commande (2) vient en prise sur le côté extérieur de la couronne (6).

6. Agencement de levier de commande (1) selon l'une quelconque des revendications 1 à 3, **caractérisé en ce que** la roue solaire (9) en tant que côté d'entraînement de l'engrenage planétaire (5) est connectée de manière solidaire en rotation au levier de commande (2), tandis que la couronne (6) en tant que côté de sortie de l'engrenage planétaire (5) est connectée par engagement par correspondance géométrique et/ou par force aux moyens de connexion (3).

7. Agencement de levier de commande (1) selon la revendication 6, **caractérisé en ce que** le levier de commande (2) vient en prise sur un côté frontal de la roue solaire (9).

8. Agencement de levier de commande (1) selon l'une quelconque des revendications 1 à 7, **caractérisé en ce que** la couronne (6) est réalisée sous forme de segment de roue dentée.

9. Agencement de levier de commande (1) selon l'une quelconque des revendications 1 à 7, **caractérisé en ce que** la roue solaire (9) est réalisée sous forme de segment de roue dentée.

10. Agencement de levier de commande (1) selon les revendications 1 à 9, **caractérisé en ce que** l'engrenage planétaire (5) présente un pignon planétaire unique (7).

11. Agencement de levier de commande (1) selon l'une quelconque des revendications 1 à 10, **caractérisé en ce que** l'on prévoit pour la connexion des moyens de connexion (3) au côté de sortie de l'engrenage planétaire (5) des éléments d'étirement (15).

12. Agencement de levier de commande (1) selon l'une quelconque des revendications 1 à 11, **caractérisé en ce que** les moyens de connexion (3) pour transmettre le mouvement de commande (w) viennent en prise au moyen d'un câble Bowden (12) sur le côté de sortie de l'engrenage planétaire (5).
